Europäisches Patentamt

European Patent Office

Office européen des brevets

(11) Veröffentlichungsnummer: **0 262 606**
**A2**

# (12) EUROPÄISCHE PATENTANMELDUNG

(21) Anmeldenummer: **87114039.8**

(22) Anmeldetag: **25.09.87**

(51) Int. Cl.⁴: **F41G 3/32 , G01S 17/02**

(30) Priorität: **26.09.86 DE 3632774**
**17.08.87 DE 3727402**

(43) Veröffentlichungstag der Anmeldung:
**06.04.88 Patentblatt 88/14**

(84) Benannte Vertragsstaaten:
**BE CH DE ES FR GB LI NL**

(71) Anmelder: **Siemens Aktiengesellschaft Berlin**
**und München**
**Wittelsbacherplatz 2**
**D-8000 München 2(DE)**

(72) Erfinder: **Grage, Ludger, Dipl.-Ing.**
**Frühlingstrasse 46**
**D-8031 Eichenau(DE)**

(54) **Einrichtung zur Justierung und Kontrolle eines in ein Wärmebildgerät integrierten Laserentfernungsmesser-Senders.**

(57) Zur Justierung des Senders eines in ein Wärmebildgerät (WBG) integrierten Laserentfernungsmessers LEM wird die Lage der Sendekeule im WBG dargestellt, wobei durch geeignete Triggerverzögerung bei aufeinanderfolgenden Laserschüssen ein Abscannen der gesamten Laserkeule und somit eine vollständige Darstellung des Intensitätsprofils mit Divergenz-und Justierkontrolle möglich ist. Die Erfindung ist zur Senderkontrolle eines LEM geeignet.

## FIG 1

## Einrichtung zur Justierung und Kontrolle eines in ein Wärmebildgerät integrierten Laserentfernungsmesser-Senders.

Die Erfindung betrifft eine Einrichtung zur Justierung und Kontrolle des Senders eines in ein Wärmebildgerät integrierten Laserentfernungsmessers in bezug auf die Visierlinie des Gerätes, mit einem gemeinsamen Wärmebild-Laser-Empfangskanal mit gemeinsamer Detektoranordnung, einem die Wärme-und die Laserstrahlung auf die Detektoranordnung lenkenden Scanner, einer optoelektronischen Umwandlungseinrichtung mit einem von den Detektoren für den Empfang der Wärmestrahlung angesteuerten Leuchtdioden-Array, einem Abtast-Positions-Fühler (SPS) und einer diesem nachgeschalteten Einrichtung mit variabler Verzögerungszeit zur Triggerung des Lasersenders. Eine derartige Einrichtung ist aus der DE-PS 33 29 590 bekannt.

Für Ortungs-und Zielverfahren werden Wärmebildgeräte mit einem integrierten Laserentfernungsmesser eingesetzt, um ein Wärmestrahlung abgebendes Objekt orten und außerdem auch noch die Entfernung des georteten Objekts messen zu können. Bei der Kombination derartiger Geräte müssen die verschiedenen optischen Systeme harmonisiert werden. Dabei muß auch die Sender-und die Empfängerachse des Laserentfernungsmessers zu der Visierlinie des Geräts ausricht-bzw. kontrollierbar sein.

Der Erfindung liegt die Aufgabe zugrunde, bei einer Einrichtung der eingangs genannten Art die Justierung und Kontrolle des Laserentfernungsmesser-Senders auf möglichst einfache Weise zu bewerkstelligen.

Diese Aufgabe wird bei einer Einrichtung der eingangs genannten Art gemäß der Erfindung dadurch gelöst, daß bei aufeinanderfolgenden Sendeimpulsen die Triggerverzögerung um einen Betrag erfolgt, der der zeitlichen Ablenkung des Scanners von einem Bruchteil eines Bildpunktes entspricht und daß ein Teil der ausgesendeten Laserstrahlung über eine Umlenkeinrichtung achsparallel zum ausgesendeten Laserstrahl in den gemeinsamen Empfangskanal eingekoppelt und über den Scanner auf die Detektoren für den Empfang der Wärmestrahlung gelenkt und über die Umwandlungseinrichtung sichtbar dargestellt wird.

Bei Geräten der eingangs genannten Art ist die Divergenz der Laserkeule größer als das momentane Gesichtsfeld eines Einzeldetektorelements des Wärmebildgerätes. Es kann daher bei einem einzelnen Laserschuß nur ein vertikaler Profilschnitt dargestellt werden. Durch eine geeignete, bei der erfindungsgemäßen Einrichtung vorgesehene Triggerverzögerung bei aufeinanderfolgenden Laserschüssen ist ein Abscannen der gesamten Laserkeule und somit eine vollständige Darstellung des Intensitätsprofils mit Divergenz-und Justierkontrolle möglich. Durch die Darstellung der Lage der Sendekeule im Wärmebildgerät ist eine einfache Möglichkeit zur Justierung und Kontrolle des Lasersenders gegeben. Hierbei ist die Justier-und Kontrolleinrichtung in das Gerät integriert, d.h. das Wärmebildgerät selbst ist mit einer eingebauten Testeinrichtung ausgestattet und beinhaltet somit eine Kontrollmöglichkeit für den Lasersender.

Zur Justierung bzw. Justierkontrolle wird zunächst der Sendestrahl abgedämpft. Zweckmäßigerweise ist daher die Umlenkeinrichtung mit einem Dämpfungsfilter zur Abdämpfung des Sendestrahles ausgebildet.

Mit einem optischen Umlenkelement wird der abgedämpfte Teil des Sendestrahls in den Wärmebild-Empfangskanal eingespiegelt und mit Hilfe des Wärmebildgerätes bzw. dessen optoelektronischer Umwandlungseinrichtung sichtbar dargestellt. Die Einkopplung erfolgt - insbesondere bei weiter auseinanderliegenden optischen Achsen - mit einem planoptischen Element, z.B. einem Tripelspiegel oder einem Tripelstreifen.

Zur Justierung und Justierkontrolle des Lasersenders eignet sich aber auch ein Kollimator mit Reflektor, insbesondere ein Infrarotkollimator, vorzugsweise im 10 μ-Bereich. Hierbei wird mit dem Lasersender auf ein sich im Fokus befindliches Target geschossen und mit dem Wärmebildgerät die vom Target reflektierte Strahlung beobachtet.

Der Aufbau eines Wärmebildgerätes ist allgemein bekannt (Zeitschrift "Wehrtechnik", Oktober 1980, Seiten 21-23). Ferner sind derartige Geräte mit integriertem Laserentfernungsmesser und gemeinsamem Empfangskanal Stand der Technik (DE-PS 30 48 809). Der Aufbau eines Gerätes, bei dem die erfindungsgemäße Justier-und Kontrolleinrichtung anwendbar ist, braucht daher im einzelnen nicht näher dargelegt zu werden. Die Figuren sind daher sehr schematisch gehalten. Es zeigen

Fig. 1 die Gesamtanordnung eines Wärmebildgerätes mit integriertem Laserentfernungsmesser und einem ersten Ausführungsbeispiel einer dieser Gesamtanordnung vorgesetzten Umlenkeinrichtung,

Fig. 2 die Gesamtanordnung in vereinfachter Darstellung mit einem zweiten Ausführungsbeispiel einer Umlenkeinrichtung,

Fig.3a das Intensitätsprofil der Laserstrahlung in Scanrichtung,

Fig. 3b drei mögliche Positionen eines Detektorelementes in Scanrichtung bei aufeinanderfolgenden, verzögerten Laserimpulsen,

Fig. 3c die Intensitätsprofile der einzelnen Laserschüsse auf der Wiedergabeseite.

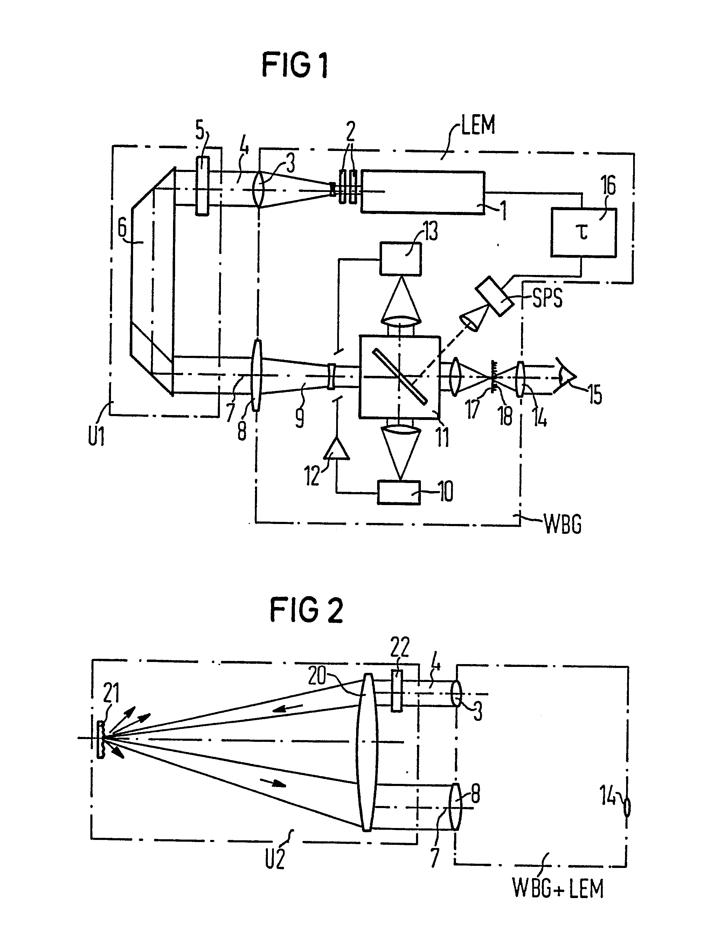

Fig. 1 zeigt den üblichen Aufbau eines Wärmebildgerätes WBG, in das ein Laserentfernungsmesser LEM mit einem Lasersender 1 integriert ist. Dem Lasersender 1 vorgeschaltet ist ein optisches Drehkeilpaar 2 und eine Sendeoptik 3, über die der Sendestrahl 4 aus dem Gerät austritt. Das Wärmebildgerät WBG umfaßt in üblicher Weise eine Empfangsoptik 8, einen gemeinsamen Wärmebild-Laser-Empfangskanal 9 mit einer gemeinsamen Detektoranordnung 10, einem die Wärme-und die Laserstrahlung auf diese Detektoranordnung 10 lenkenden Scanner 11, eine optoelektronische Umwandlungseinrichtung 13 mit einem von der Detektoranordnung 10 über einen Verstärker 12 angesteuerten Leuchtdioden-Array, das die empfangene Strahlung umwandelt und das Wärmebild in üblicher Weise über die Rückseite des Scanners 11 für einen Beobachter 15 sichtbar im Okular 14 darstellt, sowie einen Abtast-Positions-Fühler SPS und eine diesem nachgeschaltete Einrichtung 16 mit variabler Verzögerungszeit zur Triggerung des Lasersenders. Vor dem Gerät, d.h. vor der Sendeoptik 3 und der Empfangsoptik 8, ist eine Umlenkeinrichtung U1 zweckmäßigerweise in Form einer selbständigen, an das Gerät ansetzbaren Einrichtung, angeordnet. Diese Umlenkeinrichtung umfaßt bei dem Ausführungsbeispiel in Fig.1 einen den Abstand Sendestrahl 4 - Visierlinie 7 überbrückenden Tripelstreifen 6 sowie ein diesem vorgeschaltetes Dämpfungsfilter 5 zur Abdämpfung des Sendestrahles. Mit Hilfe dieser Umlenkeinrichtung U1 wird ein Teil der ausgesendeten Laserstrahlung achsparallel zum ausgesendeten Laserstrahl über die Visierlinie 7 in den gemeinsamen Empfangskanal 9 eingekoppelt und auf den Scanner 11 geleitet. Über den Scanner 11 wird die eingekoppelte Laserstrahlung dann auf die Detektoranordnung 10 für den Empfang der Wärmestrahlung gelenkt und über die Umwandlungseinrichtung 13 sichtbar dargestellt. Der Beobachter 15 erkennt dabei auf einer Strichplatte 17 eine eventuelle Ablage zwischen der Zielmarke 18 der Strichplatte und dem Laserfleck. Durch das optische Drehkeilpaar 2 läßt sich die Richtung des Laserstrahles korrigieren.

Bei dem Ausführungsbeispiel nach Fig.2 besteht die dem Wärmebildgerät WBG mit integriertem Laserentfernungsmesser LEM vorgesetzte Umlenkeinrichtung U2 aus einem passiven IR-Kollimator mit einer den Abstand Sendestrahl 4 - Visierlinie 7 überbrückenden Kollimatoroptik 20 mit einem als Streuscheibe ausgebildeten Reflektor 21 sowie ein Dämpfungsfilter 22. Bei Verwendung eines diffusen Reflektors gelangt ein Teil der auf den Reflektor einfallenden Laserstrahlung in die Empfangsoptik 8 des Wärmebildgerätes WBG und wird über den oben beschriebenen Umwandlungsprozeß dem Beobachter dargestellt.

Das wesentliche Element bei beiden Ausführungsbeispielen der erfindungsgemäßen Einrichtung ist die zwischen dem SPS und dem Lasersender 1 zu dessen Triggerung vorgesehene Einrichtung 16 (Fig.1) mit variabler Verzögerungszeit, wobei die Triggerung des Lasersenders in ganz bestimmter Weise erfolgt. Bei aufeinanderfolgenden Sendeimpulsen erfolgt die Triggerverzögerung nämlich um einen Betrag, der der zeitlichen Ablenkung des Scanners 11 von einem Bruchteil eines Bildpunktes entspricht. Auf diese Weise erfolgt bei aufeinanderfolgenden Laserschüssen ein Abscannen der gesamten Laserkeule und somit eine vollständige Darstellung des Intensitätsprofils mit Divergenz-und Justierkontrolle.

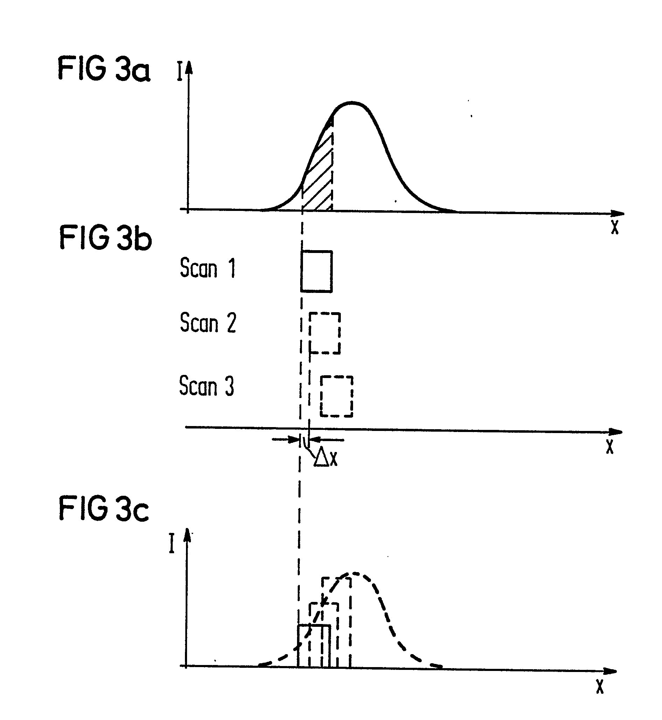

Dieser Vorgang soll anhand der Fig.3a bis 3c näher veranschaulicht werden. Dabei ist auf der I-Achse die Intensität aufgetragen, während die x-Achse die relative Lage eines Laserflecks zu der Lage des entsprechenden Detektors markiert. Fig.3a veranschaulicht das Intensitätsprofil der Laserstrahlung in Scanrichtung. In Fig.3b ist zu sehen, daß durch die kontinuierliche Triggerverzögerung die Position eines Detektorelementes jeweils um $\Delta$ x gegenüber seiner Lage beim vorhergehenden Laserschuß verschoben ist. Fig.3c stellt die Intensitätsprofile der einzelnen Laserschüsse auf der Wiedergabeseite dar, wobei das Profil - bedingt durch die integrale Wiedergabe über die LED-Leuchtfläche - Rechteckcharakter hat.

## Ansprüche

1. Einrichtung zur Justierung und Kontrolle des Senders eines in ein Wärmebildgerät integrierten Laserentfernungsmessers in bezug auf die Visierlinie des Gerätes, mit einem gemeinsamen Wärmebild-Laser-Empfangskanal mit gemeinsamer Detektoranordnung, einem die Wärme-und die Laserstrahlung auf die Detektoranordnung lenkenden Scanner, einer optoelektronischen Umwandlungseinrichtung mit einem von den Detektoren für den Empfang der Wärmestrahlung angesteuerten Leuchtdioden-Array, einem Abtast-Positions-Fühler (SPS) und einer diesem nachgeschalteten Einrichtung mit variabler Verzögerungszeit zur Triggerung des Lasersenders, **dadurch gekennzeichnet,** daß bei aufeinanderfolgenden Sendeimpulsen die Triggerverzögerung um einen Betrag erfolgt, der der zeitlichen Ablenkung des Scanners (11) von einem Bruchteil eines Bildpunktes entspricht und daß ein Teil der ausgesendeten Laserstrahlung (4) über eine Umlenkeinrichtung (U1,U2) achsparallel zum ausgesendeten Laserstrahl (4) in den gemeinsamen Empfangskanal (9) eingekoppelt und über den Scanner (11) auf die Detektoren (10) für den Empfang der Wärmestrahlung gelenkt und über die Umwandlungseinrichtung (13) sichtbar dargestellt wird.

2. Einrichtung nach Anspruch 1,
**dadurch gekennzeichnet,**
daß die Umlenkeinrichtung (U1,U2) mit einem Dämpfungsfilter (5 bzw. 22) zur Abdämpfung des Sendestrahles (4) ausgebildet ist.

3. Einrichtung nach Anspruch 1 oder 2,
**dadurch gekennzeichnet,**
daß die Umlenkeinrichtung (U1) ein planoptisches Element, z.B. einen Tripelspiegel oder einen Tripelstreifen (6) aufweist.

4. Einrichtung nach Anspruch 1 oder 2,
**dadurch gekennzeichnet,**daß die Umlenkeinrichtung (U2) einen Kollimator (20) mit Reflektor (21), z.B. einen passiven IR-Kollimator umfaßt.

5. Einrichtung nach Anspruch 4,
**dadurch gekennzeichnet,**
daß der Reflektor (21) aus einer Streuscheibe besteht.

FIG 1

FIG 2

FIG 3a

FIG 3b

Scan 1

Scan 2

Scan 3

$\Delta x$

FIG 3c